(19) Europäisches Patentamt
European Patent Office
Office européen des brevets

(11) **EP 4 328 570 A1**

(12) **EUROPEAN PATENT APPLICATION**

(43) Date of publication:
**28.02.2024 Bulletin 2024/09**

(21) Application number: **22192194.3**

(22) Date of filing: **25.08.2022**

(51) International Patent Classification (IPC):
***G01N 21/892*** (2006.01)

(52) Cooperative Patent Classification (CPC):
**G01N 21/958; G01N 21/8803; G01N 21/8851; G01N 21/892;** G01N 21/8422

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Saint-Gobain Glass France**
**92400 Courbevoie (FR)**

(72) Inventor: **PLATTEEUW, Nicolas**
**4878 AH-Etten-Leur (NL)**

(74) Representative: **Saint-Gobain Recherche**
**B.P. 135**
**39, quai Lucien Lefranc**
**93303 Aubervilliers Cedex (FR)**

(54) **METHOD TO CLASSIFY QUENCH PATTERNS OF INSULATING GLAZING UNITS AND PREDICT THE OPTICAL VISIBILITY THEREOF**

(57)    A method to classify quench patterns according to their visibility in sheets of mineral glass within insulating glazing units. Each insulating glazing unit comprises a series of N coated or uncoated sheets of mineral glass, and at least one, preferably N-1, sheets of mineral glass of the series are heat-treated coated or uncoated sheets of mineral glass. The method takes as input a dataset of optical visibility scores OVS-IGU, assessed by human observers, for quench patterns of each insulating glazing unit, and a dataset of the light transmission coefficients LT-DS of the sheets of mineral glass before the rear sheet of mineral glass of each insulating glazing unit. It provides as output a dataset of weighing factors DS-WF for the optical visibility scores of quench patterns for the sheets of mineral glass after the front sheet of the series of N sheets of mineral glass within an insulating glazing unit. The dataset of weighing factors may thereafter be used as a classifier in prediction method to predict the visibility of quench patterns within an insulating glazing unit.

[Fig. 1]

Fig. 1

**EP 4 328 570 A1**

**Description**

**Technical field**

The invention pertains to computer implemented methods to classify quench patterns of insulating glazing units comprising at least one heat-treated uncoated or coated mineral glasses and predict the optical visibility thereof.

**Technical background**

Quench pattern, also called 'strain pattern', is an optical phenomenon occurring in coated or uncoated tempered or heat-treated, e.g., heat-strengthened or heat-toughened, glasses which manifests by a pattern of iridescence or shadows.

Quench patterns are caused by small variations in the density or refractive index of glass which are due the rapid cooling, generally air cooling, of the heat-treating process of glasses. These small variations induce local strains in the glass which in turn lead to birefringence or optical anisotropy. The intensity of this optical phenomenon may vary from glass to glass and may depend upon many factors such as the glass thickness and/or the cooling conditions of the heat-treating process.

According to section 7.5 of ASTM C1048, quench patterns in tempered glasses are not normally visible. They are characteristic of these kinds of glasses and should not be mistaken as discoloration or not uniform tint or colour.

Occasionally, quench patterns, may be observed under certain lighting conditions, in particular under polarized light, for instance under a blue sky or under incident light which previously reflected by water surface or by another glass surface.

According to current industry standards, e.g., ASTM C1048, quench patterns are not considered as glass defects and are not a cause for rejection. Quench patterns do not alter the structural integrity of the glass, and thus have no consequence on the mechanical and chemical properties of the glass. They are also not considered to have aesthetic consequences on final glass products.

However, as aesthetic considerations now take increasing importance in the design and management of architectural projects, there is a growing concern upon quench patterns since they may have a negative effect on the final rendering of glazed facades of buildings. For instance, quench patterns, that were not initially considered or viewed as critical during lab-scale investigations, or in mock-ups under site conditions or in surrounding landscape like those of the final facades of the buildings, may however become critical flaws on large, glazed façades of building when they are exposed to incident light from multiples lighting sources in final conditions, i.e., blue sky and multi reflected lights from the glazed of surrounding buildings.

Furthermore, while quench patterns may have acceptable aesthetical consequences on uncoated tempered glasses, same quench patterns may be enhanced and become more visible on coated glasses. Coatings, such as coatings made of refractive and/or reflecting thin films, may refract differently the incident light so that said quench patterns may be revealed through colour variations.

In this context, quality criteria regarding for both uncoated and coated heat-strengthened and tempered glasses for certain architectural applications begin to become increasingly stringent. The art provides different methods and devices to analyse quench patterns in a glazing.

WO 2011/157815 A1 [AGC GLASS EUROPE [BE]] 22.12.2011 discloses a method for analysing quench pattern in glazing, wherein local stresses are measured by photoelasticimetry, and compared to criteria in a reference database comprising statistically established optical visibility scores assessed by human observers.

WO 2018/220328 A1 [SAINT GOBAIN GLASS FRANCE [FR]] 06.12.2018 discloses a device and a method for quench pattern in glazing wherein quench pattern are imaged through a measure of optical retardation.

EP 3 722 265 A1 [SAINT GOBAIN [FR]] 11.04.2019 discloses a computer implemented method for evaluating the sensitivity of glazing to form quench pattern, wherein a colour sensitivity factor is calculated from colour variation, in transmission or reflexion, between an area of the glazing which does not induce optical phase shift and an area of the glazing which induces such shift.

**Summary of the invention**

Technical problem

The International Commission for Illumination (CIE) showed that colour perception among human observers is relatively homogeneous, and the CIE colour space provides a reliable qualitative and quantitative relationship between the electromagnetic visible spectrum and the colours perceived by human observers.

However, establishing a scoring method to assess the optical quality of uncoated or coated heat-strengthened and tempered glasses within an insulating glazing unit regarding the visibility of quench patterns within its individual component, i.e., glass sheets, remains challenging. Finding out or establishing technical rationales behind the visibility scores provided by a given sample of observers, i.e., architects, glass quality experts, final customers, ... is still desired.

Methods which rely on databases providing relationships between optical features of glazing and visibility scores of quench pattern are unreliable since said databases are only effective for given products and the relationships are often based on human decisions for establishing the contribution of each optical feature, and at what extend, to the visibility scores.

Furthermore, such databases may become quite complex as the number of optical features that are considered in and/or the number of visibility scores increase. Said methods may then fail as being reproducible and polyvalent for classifying quench patterns based on their optical visibility scores when said optical visibility scores are assessed by human observers, and/or for predicting their visibility in a term of human perception.

Further, within an insulating glazing unit comprising a series of N coated or uncoated sheets of mineral glass, the visibility of quench patterns of one or several of said sheets of mineral glass may change comparing to when said sheets of mineral glass are observed as standalone sheets, i.e., when they are not assembled in an insulating glazing unit. Without being bound to any particular theory, this change in the visibility of quench patterns may be due to the multiple reflection and/or refraction of light occurring within the insulating glazing unit. Such phenomena are currently not considered in methods of the art. Thus, they are not adapted for the case of insulating glazing units.

In this context, it is of interest for glass manufacturers to have a reliable and easy to use method to assess the optical quality of uncoated or coated heat-strengthened or tempered glasses regarding the visibility of quench pattern within an insulating glazing unit.

The method may be ideally independent of the glass product under investigation. Not only such method may be a tool to define quality criteria for glass products by which it can be assesses whether a glass product fulfils requirements for a given application regarding the visibility of quench patterns, but it may also help to evaluate the performances of the heat-treating processes of the glass manufacturing lines and acting onto them to reduce the formation of quench patterns.

## Solution to the technical problem

In a first aspect of the invention, there is provided a computer implemented classification method as described in claim 1, dependant claims being advantageous embodiments.

The method classifies quench patterns according to their visibility in sheets of mineral glass within insulating glazing units. Each insulating glazing unit comprises a series of N coated or uncoated sheets of mineral glass, and at least one, preferably N-1, sheets of mineral glass of the series are heat-treated coated or uncoated sheets of mineral glass.

The method takes as input a dataset of optical visibility scores OVS-IGU for quench patterns of each insulating glazing unit, and a dataset of the light transmission coefficients LT-DS of the sheets of mineral glass before the rear sheet of mineral glass of each insulating glazing unit.

The optical visibility scores are assessed by human observers according to an arbitrary scale, so that freedom is provided for the choice in number of marks for that scale. The scale may then be adapted depending on the application for the glass products.

The method provides as output a dataset of weighing factors DS-WF for the optical visibility scores of quench patterns for the sheets of mineral glass after the front sheet of the series of N sheets of mineral glass within an insulating glazing unit

The dataset of weighing factors may thereafter be used as a classifier for quench patterns of heat-treated coated or uncoated mineral glass regarding their optical visibility within an insulating glazing unit.

In this respect, in a second aspect of the invention, there is provided a computer implemented prediction method as described in claim 7, dependant claims being advantageous embodiments.

The method predicts the optical visibility of quench patterns of heat-treated coated or uncoated mineral glasses by taking as input a dataset of optical visibility scores of each sheet of mineral glass of the series of mineral glass and providing as output a dataset of corrected optical visibility scores for each sheet of mineral glass within said insulating glazing unit.

In third, fourth and fifth aspects of the invention, there is provided a data processing system, a computer program and a computer-readable medium to carry out methods according to the first and second aspects of the invention.

## Advantages of the invention

A first outstanding benefit of the invention is to provide a qualitative and quantitative scoring method for the visibility of quench patterns of heat-treated uncoated or coated sheets of mineral glass within an insulating glazing unit. The method is based on measurable optical properties of the sheets of mineral glass of the insulating glazing unit.

Therefore, a technical framework is provided to define quality criteria for insulating glazing units regarding the visibility quench patterns while, thanks to its heuristic nature, it alleviates the need for a time and R&D resources consuming investigation to establish a physical model from optical properties for the glass products that still require to be identified.

A second benefit of the invention is that the classification method may indirectly give some insights on which feature of the glass product may contribute to the optical visibility scores assessed by human observers and provided as input. These insights may help to identify the features onto which actions may be undergone to improve the optical quality of insulating glazing units.

A third benefit of the invention is its predictive nature. Indeed, it can be used as a predictive tool to qualify insulating glazing units depending on their final application. In particular, the invention allows to confirm that an insulating glazing unit fulfils given requirements in view of standards for aesthetical applications.

Additional features and advantages of the embodiments will be set forth in the detailed description and examples, and in part will be readily apparent to those skilled in the art from that description and examples or be recognized by practicing the embodiments described herein, including the detailed description, the examples, and the appended drawings.

## Brief description of drawings

Fig. 1 is schematic sectional representation of an insulating glazing unit.
Fig. 2 is an image retardation map of a sheet of mineral glass illustrating quench patterns.
Fig. 3 is a data flow diagram of a computer implemented classification method according to the first aspect of the invention.
Fig. 4 is a data flow diagram of a computer implemented prediction method according to the second aspect of the invention.
Fig. 5 is a plot of a linear regression between the optical visibility scores of double glazing units and the effective light transmission of their sheet of mineral glass with classification method according to the first aspect of the invention.

## Detailed description of embodiments

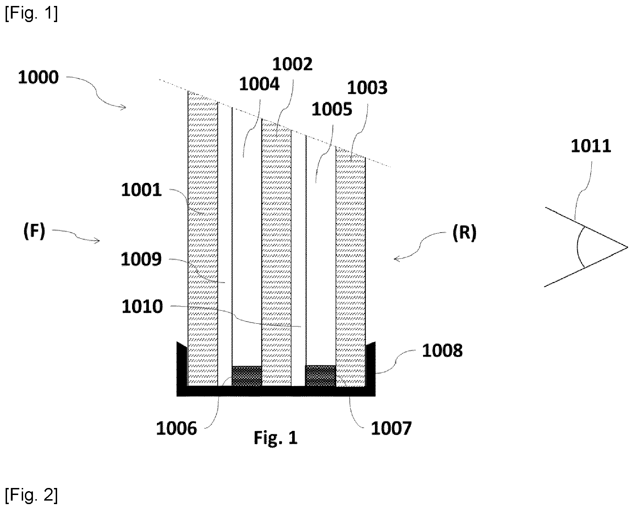

Insulating glass units, e.g., double, triple or more insulating glass unit, are well known in the art. With reference to fig. 1, as an illustrating example, an insulating glass unit 1000 may comprise a series of N - exemplified as N equals 3 on fig. 1 - coated or uncoated sheets 1001, 1002, 1003 of mineral, preferably transparent, glass. The insulating glass unit 1000 may further comprise an insulating gas layer or blade 1004, 1005, and a spacer 1006, 1007 between each sheet of glass. A sealing joint 1008 may further join the sheets of glass for mechanical strength and watertightness of the insulating glass unit.

At least one, preferably N-1 - exemplified as N-1 equals 2 on fig. 1 -, of the sheets of mineral glass are heat-treated coated or uncoated sheets. As exemplified on fig. 1, the sheets 1001, 1002 are coated with a coating 1009, 1010 whereas the sheet 1003 is uncoated. One, two or three of the sheets 100, 1002, 1003 are heat-treated. The coatings 1009, 1010 of the coated sheets 1001, 1002 of glass are on and in contact with their inner surface and with the gas of the insulating gas layers or blades 1004, 1005.

In the context of the disclosure, the first sheet 1001 and the last sheet 1003 of the series of sheets of mineral glass are respectively referred to as the front sheet (F) and the rear sheet (R) of the insulating glass unit, the rear sheet being the sheet from or in front of which a human observer 1011 is looking or observing said insulating glass. The reference to a front sheet (F) and to a rear sheet (R) is a matter of choice depending on the location, either outside or inside, of said human observer 1011 with respect to the local or room in which the insulating glass unit is installed or set up. For instance, if the human observer is outside, i.e., outdoors, said local or room, the rear sheet (R) is the sheet which faces and is contact with the exterior environment, whereas, if the human observer 1011 is inside, i.e., indoors, the rear sheet (R) is the sheet which faces and is in contact with the interior environment.

The coatings 1009, 1010 may be designed to provide 'solar control' or 'low emissivity' functions to the insulating glass unit 1000. They may be functional stacks of thin films or layers including one, two, three or more infrared radiation reflecting layers, e.g., metallic layers such as silver based layers, arranged dielectric assemblies or modules. The dielectric assemblies or module are usually designed to neutralize of the optical effects occurring from the multiple reflections and refraction of the electromagnetic radiation between layers in the visible domain. The dielectric assemblies or modules usually comprise one or more dielectric thin films of the nitride material, e.g., silicon or aluminium nitride or a combination thereof, and/or oxide material, e.g., silicon oxide, zinc oxide, tin oxide, aluminium oxide, or a combination thereof.

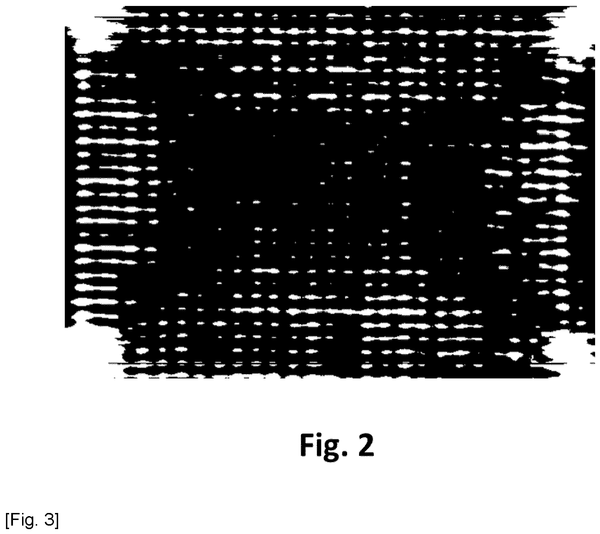

As mentioned above, quench patterns may occur in heat-treated or tempered, e.g., heat-strengthened or heat-toughened, sheets of glass. An example of quench patterns in a heat-treated sheet of mineral glass is illustrated by the optical retardation map of fig. 2 acquired in transmission under circular polarized light. In heat-treated mineral glass, optical retardation describes the change in the polarization of the illuminating light. Optical retardation is well described in the art and several methods exist to extract them, e.g., ASTM C1901 standard, WO 2018/220328 A1 [SAINT GOBAIN GLASS FRANCE [FR]] 06.12.2018, or Dix et al., Digital image processing methods for the evaluation of optical anisotropy effects in tempered architectural glass using photoelastic measurements standard, Glass Structures & Engineering (2021) 6:3-19, which provide examples of methods to acquire optical retardation image map of mineral glass sheet.

As illustrated on fig. 2, the quench patterns are materialized by discontinuous horizontal white lines. Under visible light, the quench patterns are patterns of iridescence or shadows. As mentioned above, these quench patterns may have aesthetical drawbacks in the design and management of architectural projects, even more so when the sheets of glass comprise coating such as stack of thin films or layers comprising refractive and/or reflective layers and/or when they are under polarized light, for instance under a blue sky or under incident light which previously reflected by water surface or by another glass surface.

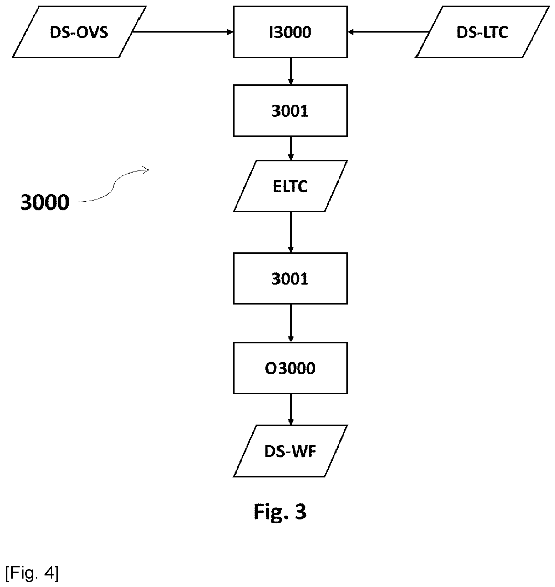

In this context, in a first aspect of the invention, with reference to fig. 3, there is provided a computer implemented classification method 3000 to classify quench patterns according to their visibility in sheets 1001-1003 of mineral glass within insulating glazing units 1000;

wherein each insulating glazing unit comprises a series of N coated or uncoated sheets 1001-1003 of mineral glass;
wherein the first 1001 and the last 1003 sheets of mineral glass of the series are respectively the front (F) and the rear (R) sheets 1001, 1003 of mineral glass of said insulating glazing units 1000;
wherein at least one, preferably N-1, sheets 1001,1002 of mineral glass of the series are heat-treated coated or uncoated sheets of mineral glass;
wherein said method 3000 takes as input I3000 a dataset DS-OVS of optical visibility scores for quench patterns of each insulating glazing unit, and a dataset DS-LTC of the light transmission coefficients of the sheets of mineral glass before the rear (R) sheet 1003 of mineral glass of each insulating glazing unit 1000;
wherein said optical visibility scores DS-OVS are assessed by human observers 1011 according to an arbitrary scale for quench patterns observed from the rear (R) sheet 1003 of mineral glass of each insulating glazing unit 1000 under given lighting and observation conditions;
wherein said method 3000 provides as output O3000 a dataset DS-WF of weighing factors for the optical visibility scores of quench patterns for the sheets 1002, 1003 of mineral glass behind the front (F) sheet 1001 of the series of N sheets of mineral glass within an insulating glazing unit 1000;
wherein said method 3000 comprises:

- a step 3001 of calculation of the effective light transmission coefficients ELTC of the $(i-1)^{th}$ sheets of mineral glass by the composite multiplication of the light transmission coefficients DS-LTC of the sheets of mineral glass from the front (F) sheet 1001 to the $(i-1)^{th}$ sheets of the insulating glazing units 1000;
- a step 3002 of performing, for the $i^{th}$ sheets 1002, 1003 of mineral glass of the series of sheets of mineral glass behind the front (F) sheet 1001 of mineral glass of the insulating glazing units 1000, a mathematical regression analysis between the dataset DS-OVS of optical visibility scores and the effective light transmission coefficients ELTC of the $(i-1)^{th}$ sheets of mineral glass;

wherein the regression parameters obtained from the mathematical regression analysis once the regression is performed are the weighing factors of the dataset DS-WF of weighing factors DS-WF.

By light transmission coefficient it should be understood light transmission coefficient as commonly defined in the field of glazing for building applications, e.g., as defined in the standard EN 410, but applied to a single sheet of mineral glass.

By 'composite multiplication of the light transmission coefficients DS-LTC of the sheets of mineral glass from the front (F) sheet 1001 to the (i-1)th sheets of the insulating glazing units 1000', it should be understood, for a given sheet $(i-1)^{th}$ of mineral glass, the successive multiplication of the light transmission coefficients of all the sheets within the series of sheets from the font (F) sheet 1001 to the (i-1th) sheet.

As a first illustrative example, for an insulating glazing unit comprising three sheets S1, S2, S3 of glass, the sheet S1 being the front (F) sheet, the effective light transmission coefficient, ELTC[S3] of the sheet S3 is provided by the following multiplication : ELT[S3] = LTC[S1]*LTC[S2]*LTC[S3] where LTC[S1], LTC[S2] and LTC[S3] are respectively the light transmission coefficients of the sheets S1, S2 and S3.

As a second illustrative example, if the insulating glazing unit further comprises a fourth sheet S4 behind the third sheet S3, the effective light transmission coefficient, ELTC[S3], of the third sheet S3 is still provided by the multiplication ELT[S3] = LTC[S1]*LTC[S2]*LTC[S3] and the effective light transmission coefficient, ELTC[S4], of the fourth sheet S4 is provided by the multiplication ELT[S4] = LTC[S1]*LTC[S2]*LTC[S3]*LTC[S4].

By 'regression analysis' it should be understood the modelling of dependent and independent variables with a mathematical function, as commonly defined in the field of statistical modelling. The mathematical function may be preferably linear. In preferred embodiments, the mathematical regression analysis is a linear regression analysis, preferably a linear least square regression analysis.

The number N of sheets of mineral glass in the series may be any number superior or equal to two depending on the configuration and the application of the insulating glass unit. In certain embodiments, the number N of sheets of mineral in the series is at two, preferably three, as most insulating glass units for building application comprise two or three sheets of mineral glass.

The optical visibility scores OVS-IGU are assessed by human observers according to an arbitrary scale. Freedom is then provided for the choice in number of marks for that scale, in particular depending on the application for the glass products.

In certain advantageous embodiments, the arbitrary scale for optical visibility scores OVS-IGU is a four-grades scale, each grade corresponding to an interval value of the effective light transmission coefficients ELTC of the $(i-1)^{th}$ sheets of mineral glass.

Experimental observations demonstrated on single sheet of mineral glass that the visibility of quench patterns may depend only on the light transmission coefficient of said sheet of mineral glass. As a rule of thumb, the less a sheet of mineral glass may transmit the visible light, the less quench patterns may be visible to a human observer. The light transmission coefficient may be divided into a few interval values, e.g., three, four or five, each interval corresponding to a given degree of visibility of quench patterns.

In an example embodiment, for a four-grades scale for optical visibility score, grade 0, i.e., quench patterns not visible, may be associated to an effective light transmission coefficient below 60%, grade 1 to an effective light transmission coefficient between 60% and 70%, grade 2 to an effective light transmission coefficient between 70% and 80%, and grade 3, i.e., highly visible quench patterns, to an effective light transmission coefficient above 80%. However, this division should not be considered as absolute since the visibility of quench pattern may vary depending on the sensibility of the human observers. Nevertheless, it may be statically representative of most applications in the field of building glazing.

The method is adapted for uncoated or coated mineral glass sheets. For coated mineral glass sheet; the coating may be on one or both sides of the glass sheet. The coating may be of any kind. It may be organic and/or inorganic, i.e., mineral. It may provide additional optical properties to the mineral glass sheet.

In certain embodiments, for which the method according to the invention provides reliable and noticeable results, the heat-treated sheets of mineral glass may be coated sheets of mineral glass, and the coating of said coated sheets may be a coating made of thin film layers and comprising at least one metallic functional layer, in particular an IR reflecting layer, e.g., a silver layer, and/or UV reflecting layer.

The optical visibility scores DS-OVS are assessed under given lighting and observation conditions. The given lighting and observation conditions may be a matter of choice and may also depend on the application for the glass products. In preferred embodiments, the given lighting observation conditions may be CIE standard conditions.

The CIE conditions, being standardized and not as versatile as arbitrary ones, may reduce uncertainties and improve the regression operation in the method. They may also provide more reproducible frameworks for the assessments of visibility scores by human observers, and, in this context, be more reliable to compare campaigns of assessment for glass sheets which are manufactured at different time.

The optical visibility scores are assessed for the quench patterns of heat-treated uncoated or coated mineral glasses under given lighting and observation conditions. The given lighting and observation conditions are also a matter of choice and may also depend on the application for the glass products. In preferred embodiments, the given lighting observation conditions are CIE standard conditions. The CIE conditions, being standardized and not versatile compared to arbitrary conditions, may reduce uncertainties, and improve the precision and the reliability of the mathematical regression analysis. They may also provide more reproducible frameworks for the assessments of visibility scores by human observers, and, in this context, be more reliable to compare campaigns of assessment for glass sheets which are manufactured at different time.

The method is adapted for heat-treated uncoated mineral glass sheets. It is also well adapted for coated mineral glass sheet; the coating may be on one or both sides of the glass sheet. The coating may be of any kind. It may be organic and/or inorganic, i.e., mineral. It may provide additional optical properties to the mineral glass sheet.

In particular advantageous embodiments, for which the method according to the invention provides reliable and noticeable results, the heat-treated sheet of mineral glass is a coated sheet, and the coating is a thin films coating comprising at least metallic functional layer, in particular an IR and/or UV reflecting layer. The method according to the invention provides reliable results for such coating.

The classification method 300 provides as output a dataset of weighing factors DS-WF for the optical visibility scores of quench patterns for the sheets of mineral glass after the front sheet of the series of N sheets of mineral glass within an insulating glazing unit. The dataset of weighing factors DS-WF may thereafter be used as a classifier for quench patterns of heat-treated coated or uncoated mineral glass regarding their optical visibility within an insulating glazing unit.

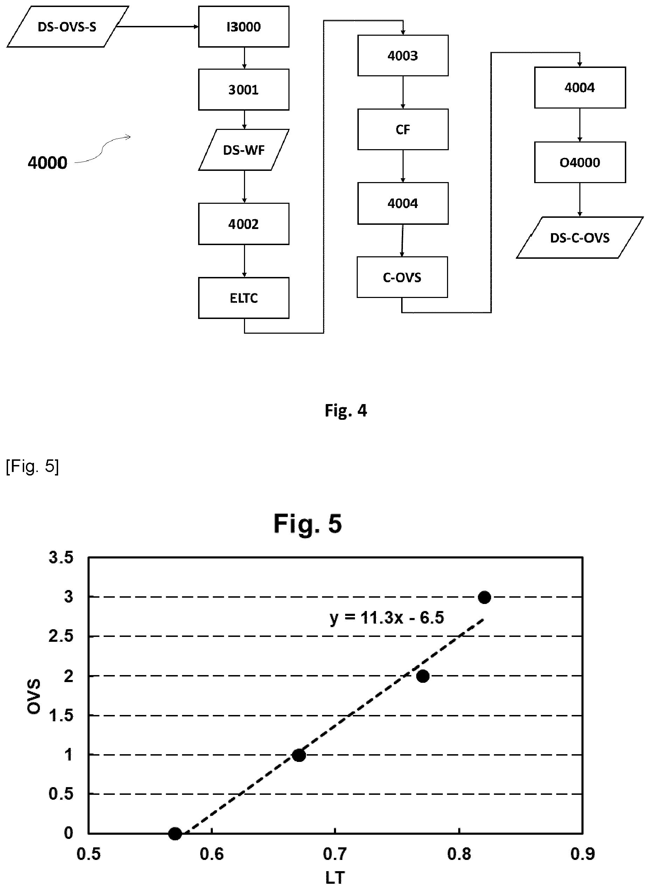

In this respect, in a second aspect of the invention, with reference to fig. 4, there is provided a computer implemented prediction method 4000 to predict the optical visibility of quench patterns in sheets 1001-1003 of mineral glass within an insulating glazing unit 1000,

wherein said insulating glazing unit comprises a series of N coated or uncoated sheets 1001-1003 of mineral glass;
wherein the first 1001 and the last 1003 sheets of mineral glass of the series are respectively the front (F) and the rear (R) sheets 1001, 1003 of mineral glass of said insulating glazing units 1000;
wherein at least one, preferably N-1, sheets 1001,1002 of mineral glass of the series are heat-treated coated or uncoated sheets of mineral glass;
wherein said method 4000 takes as input, I4000, a dataset of optical visibility scores DS-OVS-S for quench patterns of each sheet of mineral glass in the series of N sheets of mineral glass;
wherein said method provides as output, O4000, a dataset of corrected optical visibility scores DS-C-OVS for each sheet of mineral glass within said series of N sheets of mineral glass,
wherein said method 4000 comprises the followings steps:

a) computing 4001 a dataset of weighing factors DS-WF with a classification method according to any embodiments of the first aspect of the invention;
b) computing 4002 , for each i$^{th}$ sheet of mineral glass of the series of N sheets of mineral glass after the front (F) sheet of mineral glass of the insulating glazing unit, the effective light transmission coefficient ELTC of the (i-1)$^{th}$ sheet of mineral glass,
wherein said effective light transmission coefficient ELTC is calculated by the composite multiplication of the light transmission coefficients of the sheets of mineral glass from the front sheet to the (i-1)$^{th}$ sheet of the series of N sheets of insulating glass of the insulating glazing unit;
c) computing 4003, for each i$^{th}$ sheet of mineral glass of the series of sheets of mineral glass after the front (F) sheet of mineral glass of the insulating glazing unit 1000, a correction factor CF,
wherein said correction factor CF is calculated by correcting the effective light transmission calculated at step (b) with the corresponding weighing factor WF to said i$^{th}$ sheet of mineral glass from the dataset of weighing factor DS-WF corresponding;
d) computing 4004, for each i$^{th}$ sheet of mineral glass of the series of sheets of mineral glass after the front (F) sheet of mineral glass of the insulating glazing unit 1000, a corrected optical visibility score C-OVS, wherein the corrected optical visibility score C-OVS is calculated by multiplying the corresponding optical visibility score to said i$^{th}$ sheet of mineral glass from the dataset of optical visibility scores DS-OVS by the correction factor CF calculated at step (c);
e) collecting 4005 the corrected optical visibility scores C-OVS calculated at step (d) to form a dataset of corrected optical visibility scores DS-C-OVS, wherein the corrected optical visibility score C-OVS of the front (F) sheet of mineral glass of the insulating glazing unit 1000 is set to unity.

In advantageous embodiment, the optical visibility scores of the heat-treated coated or uncoated sheets of mineral glass from the dataset of optical visibility scores DS-OVS may be based on sensitivity factor of said heat-treated coated or uncoated sheets of mineral glass, wherein said colour sensitivity factor σ represents the regions-to-regions colour difference gradient of said heat-treated uncoated or coated mineral glasses from their anisotropy.

Examples of colour sensitivity factor and method of evaluation are described in EP 3 722 265 A1 [SAINT GOBAIN [FR]] 11.04.2019. Any of them may be advantageously used in the method according the second aspect of the invention. The colour sensitivity factor may be preferably evaluated in transmission.

In advantageous embodiment, the colour sensitivity factor is defined as $\sigma = \lim_{\delta \to 0} \dfrac{\Delta E(R,T^p_{iso},R,T^p_{aniso})}{\sin^2 \delta}$ , where $\Delta E(R,T^p_{iso},R,T^p_{aniso})$ is the colour difference of the reflected (R) or transmitted (T) light $R,T^p_{iso}$ on a non-dephasing zone of a glass coated with said coating and the reflected (R) or transmitted (T) light $R,T^p_{aniso}$ on a dephasing zone of same said glass with an optical phase shift $\delta$ under p-polarized light, and the colour difference may be the CIEDE2000 colour difference under CIE standard conditions.

The CIE standards provide a general framework for establishing reliable qualitative and quantitative relationship between the electromagnetic visible spectrum and the colours perceived by human observers. Thus, the CIE standards may be far more valuable as it allows to link the visual appearance of mineral glass sheets as perceived by human observers to a measurable and normalized colour difference.

Among the different definitions of colour difference in the CIE standards, the definition of CIEDE2000 is considered more precise than the CIE1974 definition. CIEDE2000 specifies the colour difference between two colour stimuli perceived as belonging to reflecting or transmitting objects and solves the perceptual uniformity issue, i.e., the set of points in the CIELAB space whose distance is less than the just-noticeable-difference threshold. A direct consequence is that the CIEDE2000 colour difference is much more representative of the colour differences which are perceived by human depending on the observation conditions.

Briefly and schematically, the discrimination ellipses in the CIELAB colour space are more elongated for CIEDE2000 colour difference than for the CIE1976 colour difference. In the CIEDE2000, the elongation is provided by additional compensation parameters - a hue rotation term, a compensation for neutral colours, a compensation for lightness, compensation for chroma and a compensation for hue - which may be associated to colour correction factors. These colour correction factors depend on the experimental conditions of observation and on the application. The CIEDE2000 colour difference is detailed in the ISO/CIE 11664-6 standard.

In a third aspect of the invention, there is provided a data processing system comprising means for carrying out a method according to any one of the embodiments of the first and second aspect of the invention.

In a fourth aspect of the invention, there is provided a computer program comprising instructions which, when executed by a computer, cause the computer to carry out a method according to any one of embodiments of the first and second aspect of the invention.

The data processing system comprises means for carrying out a method according to any of the embodiments of the first and second aspect of the invention. Example of means for carrying out the method may be a device which can be instructed to carry out sequences of arithmetic or logical operations automatically to perform tasks or actions. Such device, also called computer, can comprise one or more Central Processing Unit (CPU) and at least a controller device that are adapted to perform those operations.

It can further comprise other electronic components like input/output interfaces, non-volatile or volatile storage devices 3003, and buses that are communication systems for the data transfer between components inside a computer, or between computers. One of the input/output devices can be user interface for human-machine interaction, for example graphical user interface to display human understandable information.

As calculation may require a lot of computational power to process substantial amounts of data, the data processing system may advantageously comprise one or more Graphical Processing Units (GPU) whose parallel structure makes them more efficient than CPU, in particular for image processing in ray tracing.

For the computer program, any kind of programming language, either compiled or interpreted, may be used to implement the steps of the method of the invention. The computer program may be part of a software solution, i.e., part of a collection of executable instructions, code, scripts, or the like and/or databases.

In a fifth embodiment, there is provided a computer-readable medium comprising instructions which, when executed by a computer, cause the computer to carry out the method according to any of the embodiments of the first and second aspect of the invention.

The computer-readable storage may be preferably a non-volatile non transitory storage or memory, for example hard disk drive or solid-state drive. The computer-readable storage may be removable storage media or a non-removable storage media as part of a computer.

Alternatively, the computer-readable storage may be a volatile non-transitory memory inside a removable media.

The computer-readable storage may be part of a computer used as a server from which executable instructions can be downloaded and, when they are executed by a computer, cause the computer to carry out a method according to any of the embodiments described herein.

Alternatively, the program may be implemented in a distributed computing environment, e.g., cloud computing. The instructions can be executed on the server to which client computers can connect and provide encoded data as inputs to the method. Once data are processed, the output can be downloaded and decoded onto the client computer or directly send, for example, as instructions. This kind of implementation can be advantageous as it can be realised in a distributed computing environment such as a cloud computing solution.

### Examples

Eight double glass units were made comprising a first 6mm-thick sheet S1 and a second 6mm-thick sheet S2 of transparent soda-lime mineral glass. The first sheet S1 was the front (F) sheet of the double glass unit, the second sheet S2 was the rear (R) sheet.

The first sheet S1 was coated with a thin films coating comprising three Ag-based metallic functional layers separated from each other by dielectric modules before to be heat-treated, i.e., tempered, at a temperature around 500°C. The coating was chosen in examples of the following patent applications WO 2007/101963 A2 [SAINT GOBAIN GLASS FRANCE [FR]] 23.09.2007, WO 2012/093238 A1 [SAINT GOBAIN GLASS FRANCE [FR]] 12.07.2012, WO 2014/177798 A1 [SAINT GOBAIN GLASS FRANCE [FR]] 06.11.2014, WO 2017/006030 A1 [SAINT GOBAIN GLASS FRANCE [FR]] 12.01.2017 and WO 2019/171002 A1 [SAINT GOBAIN GLASS FRANCE [FR]] 12.09.2019. It is deposited magnetron sputtering.

The second sheet S2 of mineral glass was uncoated and not heat-treated. As the only sheet of mineral glass being heat-treated, only the sheet S1 might present quench patterns.

The light transmission coefficient of the second sheet S2 of mineral glass was 0.90. The light transmission coefficient of the first sheet S1 of mineral glass may vary depending in the nature of the coating deposited on its surface. Eight different double glazing units DGU1-8 comprising a first sheet S1 with eight different kinds of coating selected in the above referenced patent applications were manufactured. The light transmission coefficients of the first sheets S1 of each of them were reported in Table 1.

| Table 1 | DGU1 | DGU2 | DGU3 | DGU4 | DGU5 | DGU6 | DGU7 | DGU8 |
|---|---|---|---|---|---|---|---|---|
| LT | 0.52 | 0.54 | 0.57 | 0.67 | 0.67 | 0.77 | 0.77 | 0.82 |
| OVS | 0 | 0 | 0 | 1 | 1 | 2 | 2 | 3 |

The visibility of the quench patterns through the rear (R) sheet of each double glazing unit were assessed by a set human observers located at a distance of 3 meters. The scoring was based on a four-grades scoring scale from 0 to 3, where 0 corresponds to non-optically visible quench patterns, 1 to slightly visible but acceptable quench patterns, 2 to visible but still acceptable quench patterns and 3 to visible and unacceptable quench patterns. The optical visibility scores OVS are reported in Table 1.

A dataset DS-WF of weighing factors were determined with a classification method according to the first aspect of the invention by performing a linear regression between the light transmission coefficients LT and the optical visibility score OVS of Table 1. The linear regression is represented on fig. 5. Since the insulating glazing units are a double glazing unit, only a single weighing factor is obtained, which here expressed as the affine function OVS = 11.3×LT - 6.5.

In a first application example, the weighing factor was thereafter implemented in a prediction method according to the second aspect of the invention. A double glazing unit was made comprising a first 6-mm thick coated and heat-treated sheet S1 of transparent soda-lime mineral glass, and a second 6-mm thick uncoated and non heat-treated sheet of transparent soda-lime mineral glass. The coating on the first sheet S1 of mineral glass was selected in the above referenced example patent applications so that the final light transmission coefficient of the first sheet was 0.82. The light transmission coefficient of the second sheet S2 of mineral glass was 0.90.

Following the prediction method according to the second aspect of the invention, provided that the insulating glass unit is a double glazing unit, the corrected visibility score of the quench pattern through the second sheet S2, i.e., the rear (R) sheet, of mineral glass is given by the following formula: C-OVS[S2] = 11.3x0.82 - 6.5 ≈ 2.8.

The set of corrected optical visibility scores for the whole double glazing unit may be represented by the following vector {1; 2.8}, where the first number is the visibility score associated to the first sheet S1 of mineral glass - the value is set to unity since the first sheet is the front sheet, and the second number is the visibility score associated to the second sheet S2 of mineral glass

As the first sheet S1 is a coated heat-treated sheet, its colour sensitivity factor may also be considered in the optical visibility score of quench patterns when observed through the rear sheet, i.e., second sheet S2, of the double glazing unit.

Accordingly, the colour sensitivity factor $\sigma$ of the first sheet S1 was computed according to the methods described in EP 3 722 265 A1 [SAINT GOBAIN [FR]] 11.04.2019, in particular according to the following formula:

$$\sigma = \lim_{\delta \to 0} \frac{\Delta E(R^p_{iso}, R^p_{aniso})}{\sin^2 \delta}$$, where $\Delta E(R^p_{iso}, R^p_{aniso})$ is the colour difference of the reflected (R) light $R^p_{iso}$ on a non-dephasing zone of a glass coated with said coating and the reflected (R) light $R^p_{aniso}$ on a dephasing zone of same said glass with an optical phase shift $\delta$ under p-polarized light. The colour difference is CIEDE2000 colour difference under CIE standard condition. The computed colour sensitivity factor $\sigma$[S1] was 4.2. Since the second sheet S2 of mineral glass is uncoated and non heat-treated, its colour sensitivity factor is 0.

Thus, the final corrected optical visibility scores of the first S1 and second S2 sheets are respectively C-OVS[S1] = 1 × 4.2 = 4.2 and C-OVS[S2] = 0 × 2.8 = 0. The final set of corrected optical visibility scores may be then represented by the following vector {4.2; 0}.

In a second application example, a triple glazing unit was made comprising a first 6-mm thick coated and heat-treated sheet S1 of mineral transparent soda-lime mineral glass, a second 6-mm thick uncoated and non heat-treated sheet of transparent soda-lime mineral glass, and a third 6-mm thick coated and heat-treated sheet of soda-lime mineral glass. The coatings of the first S1 and third S3 sheets of mineral glass were selected in the above referenced example patent application so that the final light transmission coefficients of the first S1 sheet and third S3 sheet were respectively 0.82 and 0.54. The light transmission coefficient of the second sheet S2 of mineral glass was 0.90.

In the simplest approach, it has been surprisingly discovered that the dataset DS-WF of weighing factors obtained in the context of the eight double glazing units studied above may also directly apply to a triple glazing unit. In other words, a triple glazing unit may be decomposed into two successive double glazing units, the first S1 and second S2 sheet in one side, the second S2 and the third S3 sheet on the other side, with a common sheet, here S2. The affine function OVS = 11.3xLT - 6.5 may then be used successively.

Accordingly, and still following the prediction method according to the second aspect of the invention, the corrected visibility score of the quench pattern through the second sheet S2, of mineral glass is C-OVS[S2] = 11.3x0.82 - 6.5 ≈ 2.8, and the corrected visibility score for the third S3 sheet of mineral glass is C-OVS[S3] = 11.3x (0.82x0.90) - 6.5 ≈ 1.8, where the multiplication term (0.82x0.90) is the composite multiplication of the light transmission coefficients of the first S1 and second S2 sheets of mineral glass.

The set of corrected optical visibility scores for the whole double glazing unit may be represented by the following vector {1; 2.8; 1.8}, where the first number is the visibility score associated to the first sheet S1 of mineral glass - the value is set to unity since the first sheet is the front sheet, the second number is the visibility score associated to the second sheet S2 of mineral glass, and the third number is the visibility score associated to the third sheet S3 of mineral glass.

As the first S1 and third S3 sheet are coated and heat-treated sheets, their respective colour sensitivity factors may also be considered in the optical visibility score of quench patterns when observed through the rear sheet, i.e., third sheet S3, of the triple glazing unit.

Accordingly, the colour sensitivity factor $\sigma$ of the first S1 and third sheets of mineral glass were computed according to the methods described in EP 3 722 265 A1 [SAINT GOBAIN [FR]] 11.04.2019, in particular according to the following formula:

$$\sigma = \lim_{\delta \to 0} \frac{\Delta E(R_{iso}^p, R_{aniso}^p)}{\sin^2 \delta},$$

, where $\Delta E(R_{iso}^p, R_{aniso}^p)$ is the colour difference of the reflected (R) light $R_{iso}^p$ on a non-dephasing zone of a glass coated with said coating and the reflected (R) light $R_{aniso}^p$ on a dephasing zone of same said glass with an optical phase shift $\delta$ under p-polarized light. The colour difference is CIEDE2000 colour difference under CIE standard condition. The computed colour sensitivity factors $\sigma$[S1] and a[S3] of the first S1 and the third S3 sheets were respectively 4.2 and 8.2

Thus, the final corrected optical visibility scores of the first S1, second S2 and third S3 sheets are respectively C-OVS[S1] = 1 × 4.2 = 4.2, C-OVS[S2] = 0 x 2.8 = 0, and C-OVS[S3] = 1.8 × 8.2 = 14.8. The final set of corrected optical visibility scores may be then represented by the following vector {4.2; 0; 14.8}.

The examples clearly demonstrate that the methods according to all aspects of the invention provide a qualitative and quantitative scoring method for the visibility of quench patterns of insulating glazing units. The methods are also independent of the nature of the mineral glass and/or the nature of the coating so that different glass products can be compared to each other regarding the optical visibility of quench patterns.

**Citation List**

Patent Literature

WO 2011/157815 A1 [AGC GLASS EUROPE [BE]] 22.12.2011.
WO 2018/220328 A1 [SAINT GOBAIN GLASS FRANCE [FR]] 06.12.2018.
EP 3 722 265 A1 [SAINT GOBAIN [FR]] 11.04.2019.
WO 2007/101963 A2 [SAINT GOBAIN GLASS FRANCE [FR]] 23.09.2007.
WO 2012/093238 A1 [SAINT GOBAIN GLASS FRANCE [FR]] 12.07.2012.
WO 2014/177798 A1 [SAINT GOBAIN GLASS FRANCE [FR]] 06.11.2014.
WO 2017/006030 A1 [SAINT GOBAIN GLASS FRANCE [FR]] 12.01.2017.
WO 2019/171002 A1 [SAINT GOBAIN GLASS FRANCE [FR]] 12.09.2019.

Non-Patent Literature

ASTM C1048 - Standard Specification for Heat-Strengthened and Fully Tempered Flat Glass
ASTM C1901 - Standard Test Method for Measuring Optical Retardation in Flat Architectural Glass
Dix et al., Digital image processing methods for the evaluation of optical anisotropy effects in tempered architectural glass using photoelastic measurements standard, Glass Structures & Engineering (2021) 6:3-19 ISO/CIE 11664-6:2014 Colorimetry - Part 6: CIEDE2000 Colour-difference formula.

**Claims**

1. A computer implemented classification method (3000) to classify

   quench patterns according to their visibility in sheets (1001-1003) of mineral glass within insulating glazing units (1000);
   wherein each insulating glazing unit comprises a series of N coated or uncoated sheets (1001-1003) of mineral glass;
   wherein the first (1001) and the last (1003) sheets of mineral glass of the series are respectively the front (F) and the rear (R) sheets (1001, 1003) of mineral glass of said insulating glazing units (1000);
   wherein at least one, preferably N-1, sheets (1001,1002) of mineral glass of the series are heat-treated coated or uncoated sheets of mineral glass; wherein said method (3000) takes as input (I3000) a dataset (DS-OVS) of optical visibility scores for quench patterns of each insulating glazing unit, and a dataset (DS-LTC) of the light transmission coefficients of the sheets of mineral glass before the rear (R) sheet (1003) of mineral glass of each insulating glazing unit (1000);
   wherein said optical visibility scores (DS-OVS) are assessed by human observers (1011) according to an arbitrary scale for quench patterns observed from the rear (R) sheet (1003) of mineral glass of each insulating glazing unit (1000) under given lighting and observation conditions; wherein said method (3000) provides as output (O3000) a dataset (DS-WF) of weighing factors for the optical visibility scores of quench patterns for the sheets (1002, 1003) of mineral glass behind the front (F) sheet (1001) of the series of N sheets of mineral glass within an insulating glazing unit (1000); wherein said method (3000) comprises:

   (a) a step (3001) of calculation of the effective light transmission coefficients (ELTC) of the $(i-1)^{th}$ sheets of mineral glass by the composite multiplication of the light transmission coefficients (DS-LTC) of the sheets of mineral glass from the front (F) sheet 1001 to the $(i-1)^{th}$ sheets of the insulating glazing units (1000);
   (b) a step (3002) of performing, for the $i^{th}$ sheets (1002, 1003) of mineral glass of the series of sheets of mineral glass behind the front (F) sheet 1001 of mineral glass of the insulating glazing units (1000), a mathematical regression analysis between the dataset (DS-OVS) of optical visibility scores and the effective light transmission coefficients (ELTC) of the $(i-1)^{th}$ sheets of mineral glass;

   wherein the regression parameters obtained from the mathematical regression analysis once the regression is performed are the weighing factors of the dataset (DS-WF) of weighing factors (DS-WF).

2. A classification method according to claim 1, wherein the number N sheets of mineral glass in the series is at least two, preferably at least three.

3. A classification method according to any of claims 1 to 2, wherein the arbitrary scale for optical visibility scores (OVS-IGU) is a four-grades scale, each grade being associated to an interval value of light transmission.

4. A classification method according to any of claims 1 to 3, wherein the heat-treated sheets of mineral glass are coated sheets of mineral glass, and the coating of said coated sheets is a coating made of thin film layers and comprising at least one metallic functional layer, in particular an IR and/or UV reflecting layer.

5. A classification method according to any of claims 1 to 4, wherein the mathematical regression analysis is a linear regression analysis, preferably a linear least square regression analysis.

6. A classification method according to any of claims 1 to 5, wherein the given lighting observation conditions are CIE standard conditions.

7. A computer implemented prediction method (4000) to predict the

optical visibility of quench patterns in sheets (1001-1003) of mineral glass within an insulating glazing unit (1000), wherein said insulating glazing unit comprises a series of N coated or uncoated sheets (1001-1003) of mineral glass;

wherein the first (1001) and the last 1003 sheets of mineral glass of the series are respectively the front (F) and the rear (R) sheets 1001, 1003 of mineral glass of said insulating glazing units 1000;

wherein at least one, preferably N-1, sheets 1001,1002 of mineral glass of the series are heat-treated coated or uncoated sheets of mineral glass;

wherein said method 4000 takes as input, I4000, a dataset of optical visibility scores DS-OVS-S for quench patterns of each sheet of mineral glass in the series of N sheets of mineral glass;

wherein said method provides as output, O4000, a dataset of corrected optical visibility scores DS-C-OVS for each sheet of mineral glass within said series of N sheets of mineral glass,

wherein said method 4000 comprises the followings steps:

a) computing 4001 a dataset of weighing factors DS-WF with a classification method according to any of claims 1 to 6;

b) computing 4002 , for each $i^{th}$ sheet of mineral glass of the series of N sheets of mineral glass after the front (F) sheet of mineral glass of the insulating glazing unit, the effective light transmission coefficient ELTC of the $(i-1)^{th}$ sheet of mineral glass,

wherein said effective light transmission coefficient ELTC is calculated by the composite multiplication of the light transmission coefficients of the sheets of mineral glass from the front sheet to the $(i-1)^{th}$ sheet of the series of N sheets of insulating glass of the insulating glazing unit;

c) computing 4003, for each $i^{th}$ sheet of mineral glass of the series of sheets of mineral glass after the front (F) sheet of mineral glass of the insulating glazing unit 1000, a correction factor CF,

wherein said correction factor CF is calculated by correcting the effective light transmission calculated at step (b) with the corresponding weighing factor WF to said $i^{th}$ sheet of mineral glass from the dataset of weighing factor DS-WF corresponding;

d) computing 4004, for each $i^{th}$ sheet of mineral glass of the series of sheets of mineral glass after the front (F) sheet of mineral glass of the insulating glazing unit 1000, a corrected optical visibility score C-OVS,

wherein the corrected optical visibility score C-OVS is calculated by multiplying the corresponding optical visibility score to said $i^{th}$ sheet of mineral glass from the dataset of optical visibility scores DS-OVS by the correction factor CF calculated at step (c);

e) collecting 4005 the corrected optical visibility scores C-OVS calculated at step (d) to form a dataset of corrected optical visibility scores DS-C-OVS, wherein the corrected optical visibility score C-OVS of the front (F) sheet of mineral glass of the insulating glazing unit 1000 is set to unity.

8. A prediction method according to claim 7, wherein the optical visibility scores of the heat-treated coated or uncoated sheets of mineral glass from the dataset of optical visibility scores DS-OVS are based on sensitivity factor of said heat-treated coated or uncoated sheets of mineral glass, wherein said colour sensitivity factor σ represents the regions-to-regions colour difference gradient of said heat-treated uncoated or coated mineral glasses from their anisotropy.

9. A prediction method according to any of claims 7 to 8, wherein the colour sensitivity factor is defined as

$$\sigma = \lim_{\delta \to 0} \frac{\Delta E(R,T_{iso}^{p}, R,T_{aniso}^{p})}{\sin^2 \delta}$$ , where $\Delta E(R,T_{iso}^{p}, R,T_{aniso}^{p})$ is the colour difference of the reflected (R) or transmitted (T) light $R,T_{iso}^{p}$ on a non-dephasing zone of a glass coated with said coating and the reflected (R) or transmitted (T) light $R,T_{aniso}^{p}$ on a dephasing zone of same said glass with an optical phase shift $\delta$ under p-polarized light, and the colour difference is the CIEDE2000 colour difference under CIE standard conditions.

10. A data processing system comprising means for carrying out a method (2000, 3000) according to any one of the claims 1 to 9.

11. A computer program comprising instructions which, when executed by a computer, cause the computer to carry out a method (2000, 3000) according to any one of the claims 1 to 9.

12. A computer-readable medium comprising instructions which, when executed by a computer, cause the computer to carry out the method (2000, 3000) according to any of claims 1 to 9.

[Fig. 1]

Fig. 1

[Fig. 2]

**Fig. 2**

[Fig. 3]

**Fig. 3**

[Fig. 4]

**Fig. 4**

[Fig. 5]

**Fig. 5**

$$y = 11.3x - 6.5$$

**EUROPEAN SEARCH REPORT**

Application Number

EP 22 19 2194

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | FR 3 077 386 A1 (SAINT GOBAIN [FR]) 2 August 2019 (2019-08-02) * page 7, lines 1-13; figure 1 * * page 8, lines 9-14 * * page 9, lines 13-16 * ----- | 1-12 | INV. G01N21/892 |

TECHNICAL FIELDS
SEARCHED      (IPC)

G01N

The present search report has been drawn up for all claims

| Place of search | Date of completion of the search | Examiner |
|---|---|---|
| Berlin | 1 February 2023 | Roy, Christophe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 19 2194

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2023

| Patent document cited in search report | | Publication date | Patent family member(s) | | Publication date |
|---|---|---|---|---|---|
| FR 3077386 | A1 | 02-08-2019 | FR | 3077386 A1 | 02-08-2019 |
| | | | WO | 2019150021 A1 | 08-08-2019 |

For more details about this annex : see Official Journal of the European Patent Office, No. 12/82

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011157815 A1
- WO 2018220328 A1
- EP 3722265 A1
- WO 2007101963 A2
- WO 2012093238 A1
- WO 2014177798 A1
- WO 2017006030 A1
- WO 2019171002 A1

### Non-patent literature cited in the description

- **DIX et al.** Digital image processing methods for the evaluation of optical anisotropy effects in tempered architectural glass using photoelastic measurements standard. *Glass Structures & Engineering,* 2021, vol. 6, 3-19